# EUROPEAN PATENT APPLICATION

(11) **EP 1 837 066 A2**
(43) Date of publication of application: **26.09.2007**
(21) Application number: 06127260.5
(22) Date of filing: 28.12.2006
(51) Int. Cl.: B01D 47/02

(54) **Device for suppressing fine particles, particularly for a vehicle**

(30) Priority: 22.03.2006 IT TV20060048
(71) Applicant: Saviane, Terzo, 31044 Montebelluna TV (IT)
(72) Inventor: Saviane, Terzo, 31044 Montebelluna TV (IT)
(74) Representative: Modiano, Micaela Nadia

(57) **Abstract**

A device (1) for suppressing fine particles, particularly for a vehicle, comprising at least one suction and filtration assembly (3), which can be arranged in the trunk or on the outside of the vehicle, to which one or more ducts (14) lead which are connected to conveyance means (23a, 23b) for the particles, which can be positioned preferably in the front and/or rear region, adjacent to the ground, and/or on the roof and/or sides and/or proximate to the wheels of the vehicle, and for the exhaust gases of the vehicle; the suction assembly (3) has at least one outlet (6) for the air which is connected to the outside.

## Description

The present invention relates to a device for suppressing fine particles, particularly for a vehicle.

The problem of air pollution caused by fine particles is currently increasingly felt; such fine particles are a mixture of solid or liquid particles of very small size (diameters smaller than 10 micrometers), which comprise various chemical compounds which are harmful to human beings, such as for example polycyclic aromatic hydrocarbons.

Fine particles are generated by natural phenomena, such as for example wind erosion, forest fires, volcanic eruptions, but most of such fine particles are produced by human activities, such as for example combustion, industrial processes, and the use of vehicles with an internal-combustion engine, the latter being by far the most important cause in inhabited areas.

Fine particles can remain suspended in the air even for several days, with the risk of being inhaled by human beings; this can contribute to the onset of various diseases affecting the respiratory system and other organs of the human body.

The solution currently used in order to try to limit the amount of fine particles present in the air consists in limiting periodically their introduction in the environment by halting motor vehicle traffic, particularly in urban areas, for specific periods of time.

Traffic halting, in addition to causing inconvenience for those who need to travel by using a motor vehicle, solves the problem only partially, since it does not reduce the amount of fine particles that is already present in the air.

The settling of fine particles on the ground is in fact linked mainly to atmospheric conditions; for example, high pressure, the presence of fog, the lack of rainfall reduce the amount of fine particles that settles to the ground.

In any case, any settling to the ground of such particles still causes problems: the continuous circulation of vehicles in fact lifts the particles again, which return into suspension in the air.

Further, traffic halting does not affect the other human activities that produce fine particles, such as for example the generation of electric power in fossil-fuel power stations, which is one of the main sources of fine particles.

The aim of the present invention is to solve the above-mentioned problems, by providing a device which allows to reduce the concentration of fine particles present in the air.

Within this aim, an object of the present invention is to provide a device which reduces the amount of fine particles introduced in the air by a motor vehicle.

Another object is to provide a device which allows to remove the fine particles that have already settled on the ground.

Another object is to provide a device which allows to achieve the above cited aim and objects during the normal use of a motor vehicle.

Another object is to provide a device which is structurally simple and has low manufacturing costs.

This aim and these and other objects, which will become better apparent hereinafter, are achieved by a device for suppressing fine particles, particularly for a vehicle, characterized in that it comprises at least one suction and filtration assembly, which can be arranged preferably in the trunk or on the outside of the vehicle, to which one or more ducts lead which are connected to conveyance means for said particles, which can be positioned in the front and/or rear region, adjacent to the ground, and/or on the roof and/or sides and/or proximate to the wheels of said vehicle, and for the exhaust gases of said vehicle, said suction assembly having at least one outlet for the air which is connected to the outside.

Further characteristics and advantages of the invention will become better apparent from the following detailed description of a particular but not exclusive embodiment thereof, illustrated by way of non-limiting example in the accompanying drawings, wherein:

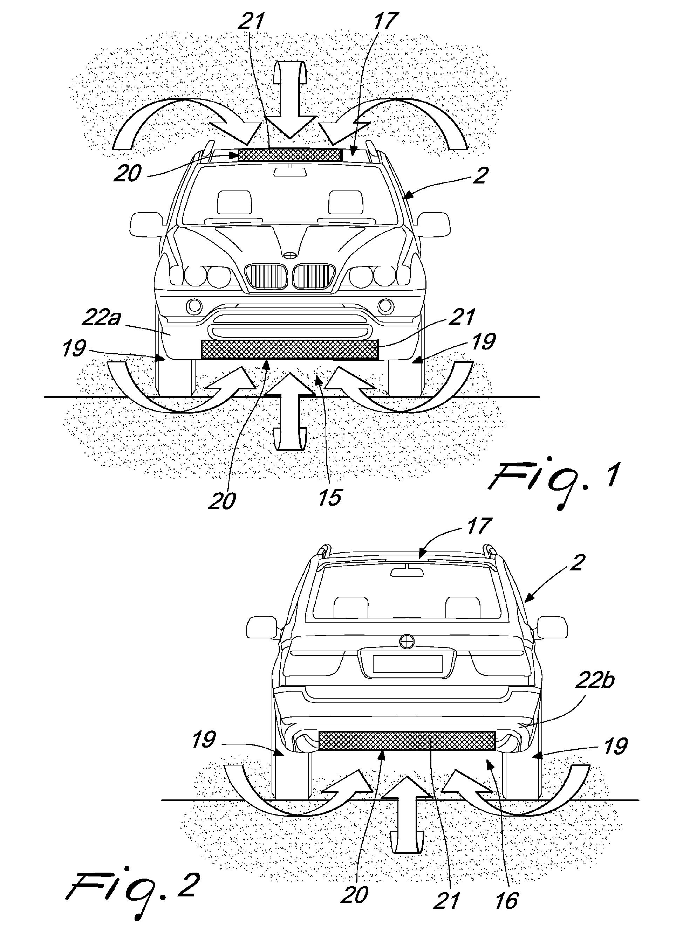

Figure 1 is a front view of a vehicle to which a device according to the invention is applied;
Figure 2 is a rear view of the vehicle of Figure 1;

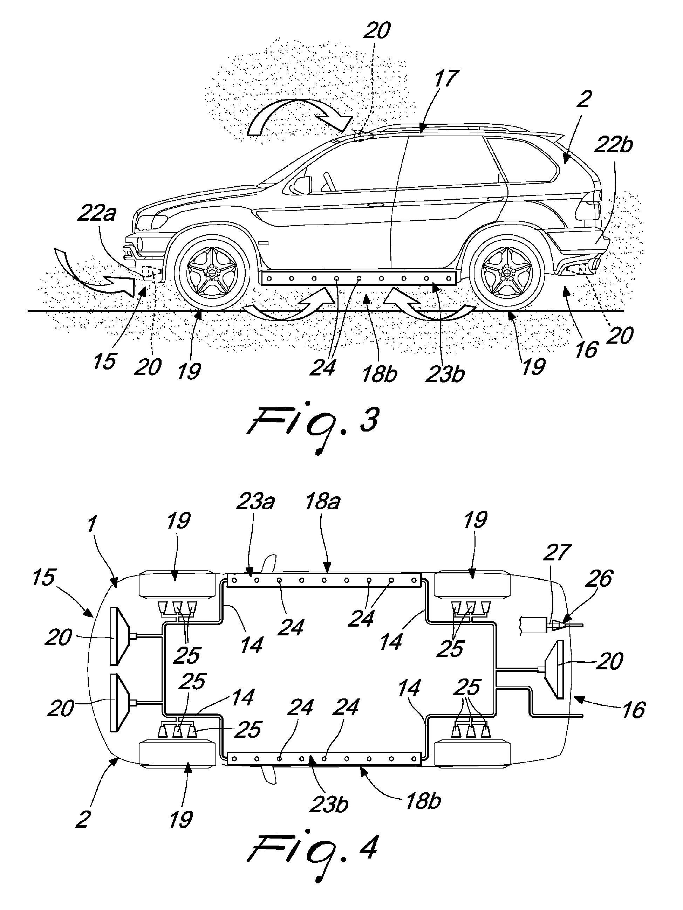

Figure 3 is a side view of the vehicle of Figure 1;
Figure 4 is a schematic view of the device according to the invention applied to a vehicle;
Figure 5 is a schematic view of the suction and filtration assembly of the device according to the invention;
Figure 6 is another schematic view of a vehicle to which a device according to the invention is applied.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a device for suppressing fine particles, particularly for a vehicle 2 such as for example a car.

As an alternative, the device can be applied to any other type of vehicle, such as for example a truck, bus or coach.

The device 1 comprises at least one suction and filtration assembly 3, which can be arranged preferably in the trunk of the vehicle 2, which is constituted advantageously by a preferably cylindrical tank 4 which is closed in an upper region by an air suction unit 5 provided with a motor whose intake is connected to the inside of the tank 4; the suction unit 5 is provided advantageously with at least an outlet 6 for the air, which is connected to the outside of the vehicle 2.

Advantageously, the suction unit 5 can be powered by connecting it to the electrical system of the vehicle 2.

The suction unit 5 can be of the type with a molecular separator which traps the particles in water.

The tank 4 is filled, preferably approximately for its lower half, with a liquid 7, which is preferably constituted by water.

Advantageously, the tank 4 is provided, proximate to its bottom 8, with a discharge valve or opening 9 for the liquid 7 contained therein.

Means suitable to prevent the liquid 7 from coming into contact with the suction unit 5 are interposed between the suction unit 5 and the liquid 7 and comprise advantageously a mechanical separator of the removable type, which is constituted by a rod 10 which is arranged approximately axially with respect to the tank 4 in the space comprised between the suction unit 5 and the bottom 8.

A plurality of disks 11 are keyed radially to the rod 10, are approximately parallel and spaced with respect to each other, and have a diameter which is approximately equal to the inside diameter of the tank 4, so as to be arranged with their peripheral edge engaged with the internal lateral surface 12 of said tank.

Advantageously, starting from the perimetric edge of each of the disks 11 there is at least one bevel which forms, between the internal lateral surface 12 of the tank 4 and the disk 11, an opening 13 which is adapted to allow the passage of air; the disks 11 are keyed to the rod 10 so that the openings 13 of two contiguous disks 11 do not face each other.

As an alternative, the openings 13 can be provided in an internal region of the disks 11.

The disks 11 and the openings 13 form, inside the tank 4, a labyrinth-like path which connects the suction unit 5 to the region which contains the liquid 7; said labyrinth-like path allows the passage of air but hinders the rise toward the suction unit 5 of any drops of liquid 7 which might damage it.

One or more ducts 14 converge at the suction and filtration assembly 3 and are connected to conveyance means for said particles, which can be arranged preferably in the front region 15 and/or rear region 16 adjacent to the ground and/or on the roof 17 and/or on the sides 18a, 18b and/or proximate to the wheels 19 of the vehicle 2, and for the exhaust gases of the vehicle 2.

Advantageously, the conveyance means for said particles located in the front region 15 and rear region 16 which are adjacent to the ground and on the roof 17 are constituted for example by a box-like body 20, which is approximately funnel-shaped.

The box-like body 20 is internally hollow, has a preferably approximately rectangular cross-section and a plan shape which is approximately like an isosceles trapezoid, and is arranged partially inside the vehicle; each box-like body 20 has a smaller side which is connected to a duct 14 and a larger side which is connected to the outside of the vehicle 2; optionally, the larger side of the box-like body 20 can be provided with a grille 21 adapted to prevent the penetration therein of large foreign objects, such as for example insects.

Advantageously, the box-like bodies 20 can be fixed for example inside the front bumper 22a and/or rear bumper 22b of the vehicle 2 and/or inside an appropriately provided interspace formed on the roof 17 of said vehicle.

Advantageously, the conveyance means for said particles located on the sides 18a, 18b of the vehicle are constituted for example by two tubes, designated by the reference numerals 23a and 23b, which are connected to a duct 14 and in which holes 24 suitable for the passage of air are provided.

Advantageously, the conveyance means for said particles which can be arranged proximate to the wheels 19 of the vehicle are constituted for example by one or more first ports 25, which are connected at the delivery to a duct 14 and are fixed for example to the body of the vehicle 2, preferably proximate to the inner side of the wheels 19 or of the braking system (disks or drums).

Such conveyance means for the exhaust gases of said vehicle are constituted advantageously by a second port 26, which is adjacent to, or connected to, the exhaust pipe 27 of the vehicle 2, so as to collect completely or partially the exhaust gases released by said vehicle and send them to the suction and filtration assembly 3 through a duct 14; preferably, the exhaust pipe 27 of the vehicle 2 does not protrude outside said vehicle, as in ordinary known types of vehicle, but is instead contained within the contour of the body of the vehicle 2.

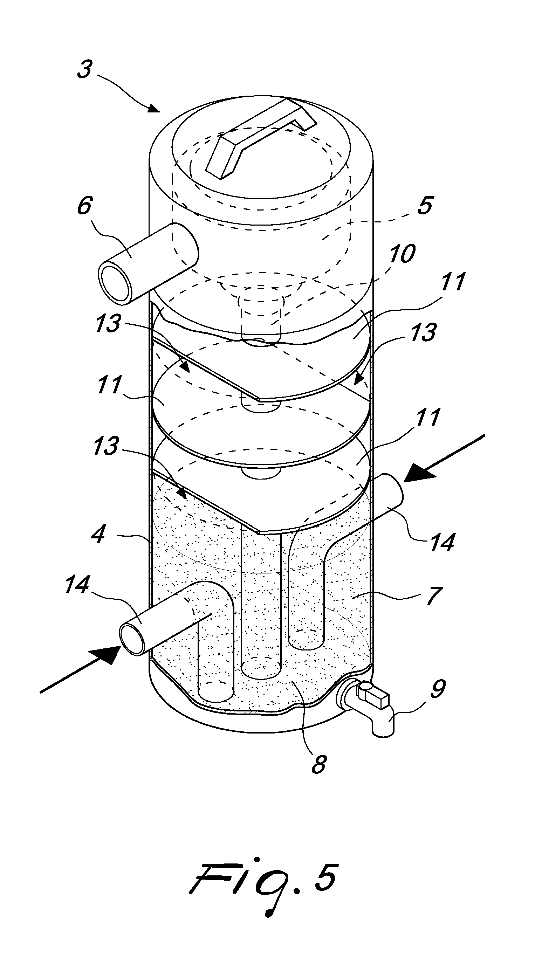

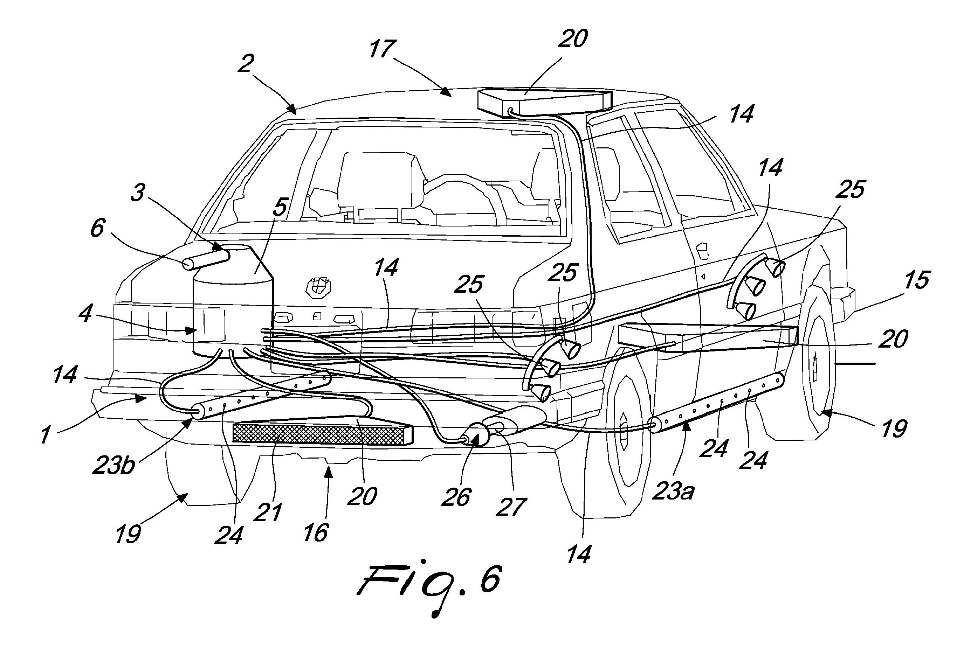

The various ducts 14 can be connected to the suction and filtration assembly 3 independently of each other, as shown in Figure 4, or, as shown in Figure 6, the various ducts 14 associated with the conveyance means for the fine particles can all be connected to each other before converging at the suction and filtration assembly 3.

Operation is therefore as follows: with reference to the accompanying figures, by actuating the suction unit 5 the conveyance means constituted by the box-like bodies 20, by the tubes 23a and 23b and by the first intake ports 25 begin to aspirate the air around the vehicle 2 and convey it, through the ducts 14, into the tank 4, inside the liquid 7.

If the vehicle 2 is running, its exhaust gases also are sent, through the second port 26 and the duct 14 connected thereto, into the liquid 7 contained in the tank 4, while the air stream caused by the motion of the vehicle increases the conveyance of air into the box-like bodies 20.

The fine particles contained in the air and in the exhaust gases are thus trapped within the liquid 7, while the air, thus purified, is aspirated by the suction unit 5 and thus exits into the outside environment through the outlet 6.

The liquid 7 which contains the fine particles can be removed periodically through the outlet valve 9 in order to be disposed of, and the tank 4 can be filled again with fresh liquid.

It has thus been found that the invention has achieved the intended aim and objects, a device having been provided which is capable of absorbing the fine particles that are present in the air that surrounds said device, depositing the particles in a liquid, such as for example water, which can then be disposed of easily.

Further, the device according to the invention allows to absorb directly the fine particles that are present in the exhaust gases of the vehicle to which it is applied, reducing the introduction of new fine particles into the environment.

Moreover, the presence of the conveyance means for the fine particles proximate to the wheels causes the fine particles lifted by the rotation of the wheels to be absorbed immediately by the device.

Further, the production costs of the device according to the invention remain low, since it is constituted by components which are easily available or simple to manufacture and assemble.

The invention is of course susceptible of numerous modifications and variations, all of which are within the scope of the appended claims.

The materials used and the dimensions that constitute the individual components of the invention may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

The disclosures in Italian Patent Application No. TV2006A000048 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for suppressing fine particles, particularly for a vehicle, **characterized in that** it comprises at least one suction and filtration assembly, which can be arranged preferably in the trunk or on the outside of the vehicle, to which several ducts lead which are connected to conveyance means for said particles, which can be positioned in the front and/or rear region, adjacent to the ground, and/or on the roof and/or sides and/or proximate to the wheels of said vehicle, and for the exhaust gases of said vehicle, said suction assembly having at least one outlet for the air which is connected to the outside.

2. The device according to claim 1, **characterized in that** said suction and filtration assembly is constituted by a preferably cylindrical tank, which is closed in an upper region by an air suction unit which is provided with a motor whose intake is connected to the inside of said tank and is provided with said air outlet which is connected to the outside of said vehicle.

3. The device according to claims 1 and 2, **characterized in that** said aspirator is of the type with a molecular separator, which traps the particles in the water.

4. The device according to one or more of the preceding claims, **characterized in that** said tank is filled with a liquid which is constituted preferably by water.

5. The device according to claims 1 and 4, **characterized in that** said tank is provided, proximate to its bottom, with a discharge valve or opening for said liquid contained therein.

6. The device according to one or more of the preceding claims, **characterized in that** means adapted to prevent said liquid from coming into contact with said suction unit are interposed between said suction unit and said liquid.

7. The device according to claims 1 and 6, **characterized in that** said means adapted to prevent said liquid from coming into contact with said suction unit comprise a mechanical separator of the removable type, which is constituted by a rod arranged approximately axially to said tank in the space comprised between said suction unit and said bottom, a plurality of disks being keyed radially to said rod, being approximately parallel and spaced with respect to each other and having a diameter which is approximately equal to the inside diameter of said tank, so that their perimetric edge engages the inner lateral surface of said tank.

8. The device according to claims 1 and 7, **characterized in that** starting from the perimetric edge of each of said disks there is at least one bevel which forms, between said inner lateral surface of said tank and said disk, an opening which is adapted to allow the passage of the air, said disks being keyed to said rod so that the openings of two contiguous disks do not face each other.

9. The device according to claims 1 and 7, **characterized in that** said openings are formed in an internal region of said disks.

10. The device according to claims 1 and 8 or 9, **characterized in that** said disks and said openings form, inside said tank, a labyrinth-like path, which connects said suction unit to the region that contains said liquid, said labyrinth-like path allowing the passage of air and hindering the rise toward said suction unit of any drops of liquid.

11. The device according to one or more of the preceding claims, **characterized in that** said conveyance means for said particles arranged in said front and rear regions which are adjacent to the ground and on said roof are constituted by an approximately funnel-shaped box-like body.

12. The device according to claims 1 and 11, **characterized in that** said box-like body is internally hollow, has an approximately rectangular cross-section and a plan shape which is approximately shaped like an isosceles trapezoid and is arranged partially within said vehicle, each of said box-like bodies having a smaller side which is connected to one of said ducts and a larger side which is connected to the outside of said vehicle.

13. The device according to claims 1 and 12, **characterized in that** said larger side of said box-like body is provided with a grille which is adapted to prevent the penetration therein of large foreign objects.

14. The device according to one or more of the preceding claims, **characterized in that** said box-like bodies are fixed within the front and/or rear bumpers of said vehicle and/or inside an appropriately provided interspace provided on said roof of said vehicle.

15. The device according to one or more of the preceding claims, **characterized in that** said conveyance means arranged on said sides of said vehicle are constituted by at least two tubes, which are connected to one of said ducts and in which holes suitable for the passage of air are provided.

16. The device according to one or more of the preceding claims, **characterized in that** said conveyance means which can be arranged proximate to said wheels are constituted by one or more first ports, which are connected at the delivery to one of said ducts and are fixed preferably to the body of said vehicle, preferably proximate to the inner side of said wheels or to the braking system.

17. The device according to one or more of the preceding claims, **characterized in that** said conveyance means for the exhaust gases of said vehicle are constituted by at least one second port, which is adjacent to, or connected to, the exhaust pipe of said vehicle, so as to collect totally or partially said exhaust gases emitted by said vehicle and send them, through one of said ducts, to said suction and filtration assembly.

18. The device according to claims 1 and 17, **characterized in that** said exhaust pipe of said vehicle does not protrude outside said vehicle and is contained within the contour of the body of said vehicle.

19. The device according to one or more of the preceding claims, **characterized in that** said ducts are connected to said suction and filtration assembly independently of each other.

20. The device according to one or more of the preceding claims, **characterized in that** said ducts associated with said conveyance means are all connected to each other before they converge at said suction and filtration assembly.
